(19) **Europäisches Patentamt / European Patent Office / Office européen des brevets**

(11) **EP 4 614 401 A1**

(12) # EUROPEAN PATENT APPLICATION

(43) Date of publication:
**10.09.2025 Bulletin 2025/37**

(21) Application number: **24305343.6**

(22) Date of filing: **06.03.2024**

(51) International Patent Classification (IPC):
**G06N 10/20** $^{(2022.01)}$     **G06N 10/40** $^{(2022.01)}$

(52) Cooperative Patent Classification (CPC):
**G06N 10/20; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **LESCANNE, Raphaël**
**75015 Paris (FR)**

• **ROUSSEAU, Rémi**
**75015 Paris (FR)**
• **MURANI, Anil**
**75015 Paris (FR)**
• **TOUZARD, Steven**
**75015 Paris (FR)**
• **LEGHTAS, Zaki**
**75015 Paris (FR)**

(74) Representative: **Cabinet Netter**
**36, avenue Hoche**
**75008 Paris (FR)**

(54) **A QUANTUM SYSTEM WITH A LOW RESONANT FREQUENCY MEMORY FOR STABILIZING A CAT QUBIT**

(57)     The invention relates to a non-linear superconducting quantum circuit including:
- at least one resonant portion having a first mode with a first resonant frequency and a second mode with a second resonant frequency, and
- a non-linear element (7) coupled to or at least partially included in the at least one resonant portion.

The at least one resonant portion has a resonator (27) including a capacitive element (29) and an inductive element (31) together producing the first mode, the capacitive element (29) having a capacitance of between 1 and 10 pF and/or the inductive element (31) having an inductance of between 0.3 and 5 nH such that the first resonant frequency is less than or equal to 3.5 GHz.

FIG. 8

EP 4 614 401 A1

**Description**

The field of the invention relates to stabilizing a cat qubit.

Generally speaking, superconducting qubits can be implemented as two-level systems of superconducting electronic circuits. Such qubits can be stored in bosonic modes and thus form a particular class of superconducting qubits known as bosonic qubits.

It is known from the state of the art that it is possible to stabilize cat qubits, i.e. bosonic qubits defined by a quantum manifold spanned by the superpositions of two coherent states, which are quasi-classical states of the bosonic mode. To this end, a specific dissipative stabilization mechanism may be performed and consists in engineering a non-linear conversion between two photons of a first mode - also known as memory mode or cat qubit mode - that hosts the stabilized quantum manifold and one photon of a second mode - also known as buffer mode - that is strongly dissipative.

The possibility of realizing such a qubit has been demonstrated by R. Lescanne et al. in "Exponential suppression of bit flips in a qubit encoded in an oscillator" (Nature Physics, 2020). As above-mentioned, the cat qubits rely on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability. Specifically, this was achieved by using an asymmetrically threaded superconducting quantum interference device ("ATS") as a four-wave mixing non-linear element to engineer the 2-to-1 photon conversion.

Such a 2-to-1 photon conversion is implemented by means of a parametric pump at frequency $f_p = |2f_a - f_b|$, where $f_a$ is the resonant frequency of the memory mode and $f_b$ is the resonant frequency of the buffer mode.

Cat qubits have the property to allow the realization of quantum gates such as the Z or the CNOT gate while maintaining the noise bias. The characteristics which are used to assess the quality of a quantum gate are its execution time, i.e. the time for the quantum gate to operate, and the associated error probability. For cat qubits, the phase-flip probability at the optimal time of the gate depends on the ratio $\kappa_2/\kappa_1$, where $\kappa_1$ is the single-photon loss rate - or error rate since it leads to phase-flips - of the cat qubits used to perform the quantum gate, and $\kappa_2$ is the two-photon dissipation rate - also called correction or stabilization rate - of these cat qubits. The higher $\kappa_2/\kappa_1$ is, the better the gate fidelity gets.

A possible solution for reducing the single-photon loss rate $\kappa_1$ is to lower the resonant frequency $f_a$ of the memory mode as much as possible. However, such a solution comes up against several prejudices.

First of all, reducing the resonant frequency $f_a$ of the memory mode while keeping the resonant frequency $f_b$ of the buffer mode within a prior art range of values - i.e. around 5 gigahertz (GHz) - quickly leads to a high frequency $f_p$ for the above-mentioned parametric pump. However, it is known that the amount of energy to be injected into the quantum system intended to stabilize a cat qubit in order to reach a given frequency can have detrimental effects on the coherence of such a quantum system as the given frequency to be reached is high. Furthermore, it is not possible to lower the resonant frequency of the buffer mode, as this would result in too large a thermal population of photons in the buffer.

Furthermore, reducing the resonant frequency $f_a$ of the memory mode significantly increases the thermal noise $\kappa_1 \cdot n_{th}$. Indeed, even if reducing the resonant frequency $f_a$ of the memory mode lowers the single-photon loss rate $\kappa_1$, such a reduction significantly increases the thermal population $n_{th}$ of the bath.

So far, these difficulties have led those who wanted to implement a dissipative stabilization mechanism to opt instead for a high resonant frequency $f_a$ for the memory mode.

By way of example, the resonant frequency $f_a$ of the memory mode is equal to:

- 7.58 gigahertz (GHz) in Z. Leghtas et al., "Confining the state of light to a quantum manifold by engineered two-photon loss" (Science, vol. 347, No. 6224, 2015),

- 8 gigahertz (GHz) in R. Lescanne *et al.* (2020) discussed above,

- 4 gigahertz (GHz) in C. Berdou et al., "One Hundred Second Bit-Flip Time in a Two-Photon Dissipative Oscillator" (PRX Quantum 4, 020350, 2023),

- 5.26 gigahertz (GHz) in U. Réglade et al., "Quantum control of a cat-qubit with bit-flip times exceeding ten seconds" (arXiv:2307.06617),

- 6 gigahertz (GHz) in A. Grimm et al., "The Kerr-Cat Qubit: Stabilization, Readout, and Gates" (Nature 584, pages 205-209, 2020), and

- 4.3497 gigahertz (GHz) in G. Beaulieu et al., "Observation of first- and second-order dissipative phase transitions in a two-photon driven Kerr resonator" (arXiv:2310.13636).

The present invention seeks to improve the situation.

To this end, the Applicant proposes a non-linear superconducting quantum circuit including:

- at least one resonant portion having a first mode with a first resonant frequency and a second mode with a second resonant frequency, and
- a non-linear element coupled to or at least partially included in said at least one resonant portion.

The at least one resonant portion has a resonator including a capacitive element and an inductive element together producing said first mode, said capacitive element having a capacitance of between 1 and 10 pF and/or said inductive element having an inductance of between 0.3 and 5 nH such that the first resonant frequency is less than or equal to 3.5 GHz.

According to one or more embodiments, the non-linear element is a four-wave mixing non-linear element.

According to one or more embodiments, the non-linear element is an asymmetrically threaded superconducting quantum interference device.

According to one or more embodiments, the non-linear element is included in the at least one resonant portion and is used as an inductive element within said at least one resonant portion.

According to one or more embodiments, the capacitive element is formed by a superposition of a dielectric substrate and a superconducting material layer, said superconducting material layer being etched to define a cloverleaf-like shape.

According to one or more embodiments, the capacitive element has a capacitance of between 1 and 2 pF, and preferably equal to 1.4 pF.

According to one or more embodiments, the capacitive element is a planar capacitor formed by a dielectric substrate sandwiched by a first and a second conductive plate.

According to one or more embodiments, the inductive element is a chain of Josephson junctions.

According to one or more embodiments, the first resonant frequency is of between 1 and 3.5 GHz.

According to one or more embodiments, the first resonant frequency is less than or equal to 1 GHz.

According to one or more embodiments, the first resonant frequency is substantially equal to 1 GHz.

According to one or more embodiments, a zero-point fluctuation of the phase of the first mode across the non-linear element and a zero-point fluctuation of the phase of the second mode across the non-linear element are each of between 0.005 and 0.3, and preferably between 0.01 and 0.15.

Finally, the Applicant also proposes a quantum system for stabilizing a cat qubit comprising:

- a command circuit including at least a first microwave source and a second microwave source each arranged for delivering microwave radiation, and
- a non-linear superconducting quantum circuit including at least one resonant portion having a first mode with a first resonant frequency and a second mode with a second resonant frequency, and a non-linear element coupled to or at least partially included in said at least one resonant portion.

The at least one resonant portion has a resonator including a capacitive element and an inductive element together producing said first mode, said capacitive element having a capacitance of between 1 and 10 pF and/or said inductive element having an inductance of between 0.3 and 5 nH such that the first resonant frequency is less than or equal to 3.5 GHz.

The quantum system is arranged such that, when

- the first microwave source delivers microwave radiation at a frequency equal to the absolute value of the difference between twice the first resonant frequency and the second resonant frequency to the non-linear element, and
- the second microwave source delivers microwave radiation at a frequency equal to the second resonant frequency to the second resonant portion to drive the second mode,

the non-linear superconducting quantum circuit stabilizes a two-dimensional manifold hosting said cat qubit.

Other features and advantages of the invention will become apparent from the following description provided for indicative and non-limiting purposes, with reference to the accompanying drawings, wherein:

- Figure 1 illustrates a diagram of a quantum system comprising a non-linear superconducting quantum circuit and a command circuit according to the invention,

- Figure 2 illustrates the evolution of the decay rate as a function of the resonant frequency of the memory of the quantum system of figure 1,

- Figure 3 illustrates the evolution of the dielectric losses as a function of the resonant frequency of the memory of the quantum system of figure 1,

- Figure 4 illustrates a capacitor with a cloverleaf-like design,

- Figure 5 illustrates a capacitor with a planar design,

- Figure 6 illustrates an inductor formed by a chain of Josephson junctions,

- Figure 7 illustrates a Hilbert inductor,

- Figure 8 illustrates a partial electrical equivalent diagram of a galvanic example implementation of the quantum system of figure 1,

- Figure 9 illustrates circuit equivalent to that of figure 8,

- Figure 10 illustrates a partial electrical equivalent diagram of a capacitive example implementation of the quantum system of figure 1,

- Figure 11 illustrates a partial electrical equivalent diagram of an example implementation using the inductor formed by a chain of Josephson junctions of figure 6,

- Figure 12 illustrates the performances of the quantum system 1 of figure 1 using the capacitor with a cloverleaf-like design of figure 4, and

- Figure 13 illustrates the evolution of the phase-flip rate as a function of the number of photons.

The drawings and the following description are comprised for the most part of positive and well-defined features. As a result, they are not only useful in understanding the invention, but they can also be used to contribute to its definition, should the need arise.

## A. Cat qubits

So far, the Applicant's work has been generally concerned with the stabilization of cat qubits. As previously explained, R. Lescanne *et al.* (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with :

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flips is only at the cost of linear increase of phase-flips.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flips with the average number of photons in the cat states.

It is generally considered that the use of a single repetition code is sufficient to correct the remaining errors as bit-flips are sufficiently rare; and, more particularly, a phase-flip correction code is sufficient to correct the remaining phase-flips. This can be for instance a repetition code defined in the dual base or any other state-of-the-art error correction code.

## A.1 Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $a$ is a complex number defining the cat qubit. This jump operator can be realized by coupling a lossy buffer mode b with dissipation rate $\kappa_b$, and a four-wave mixing device - typically a Josephson junction or an ATS - to the cat qubit mode a and by engineering the Hamiltonian

$$H/\hbar = g_2(a^2 - \alpha^2)b^\dagger + \text{h.c.}$$

, where $b$ is the photon annihilation operator of the buffer mode b and $g_2$ is the two-photon coupling rate, by applying to the four-wave mixing device a pump at frequency $|2f_a - f_b|$ and a drive of the buffer mode b at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, $a$ is the photon annihilation operator, $a$ is a complex number defining the cat qubit, and $\Delta$ is the detuning factor.

d) a two-photon exchange (TPE) Hamiltonian $H/\hbar = g_2(a^2 - \alpha^2)\sigma_+ + \text{h.c.}$, where $g_2$ is the complex two-photon coupling rate, $a$ is the photon annihilation operator, $a$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left((\cosh(r)a + \sinh(r)e^{i\theta}a^\dagger)^2 - \alpha^2\right)$, where $\kappa_{SC}$ is the squeezed two-photon dissipation rate, $a$ is the photon annihilation operator of the memory mode a, $a$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian

$$H/\hbar = g_{SC}((\cosh(r)a + \sinh(r)e^{i\theta}a^\dagger)^2 - \alpha^2)b^\dagger + \text{h.c.}$$, where $b$ is the photon annihilation operator of the buffer mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

f) a variant of the previous stabilization scheme e), for which the Applicant filed the European patent application EP 23175147.0, in which a bosonic qubit - called "moon cat qubit" since the two blobs of the Wigner function have a crescent moon shape - is stabilized by engineering the Hamiltonian $H/\hbar = g_2(a^2 + \lambda a^\dagger a - \alpha^2)b^\dagger + \text{h.c.}$, where $g_2$ is the amplitude of a pump at frequency $|2f_a - f_b|$, $a$ is the annihilation operator of the memory mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and $b$ is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions, such that the DC-biased non-linear element acts as a voltage-to-frequency converter which, at the appropriate voltage bias, provides the required parametric interaction at the frequency $|2f_a - f_b|$ necessary to achieve dissipative stabilization. In particular, the two-photon coupling rate $g_2$ is therefore not limited by the amplitude of the two-photon pump: $g_2 = \frac{E_J}{4}\varphi_a^2\varphi_b$, where $E_J$ is the Josephson energy of the one or more Josephson junctions, $\varphi_a$ is the zero-point fluctuation of the phase of the memory mode a, and $\varphi_b$ is the zero-point fluctuation of the phase of the buffer mode b.

h) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator of the memory mode a and $a$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/\hbar = g_2(a^2-\alpha^2)b^\dagger + \text{h. c.}$, where $b$ is the photon annihilation operator of the buffer mode b provided the mode frequencies verify substantially $2f_a = f_b$ and $g_2 < \kappa_b$ to which a drive of the buffer mode at frequency $f_b$ is added.

The present invention is generic and is not limited to a specific stabilization scheme. In particular, the teaching of the present invention can be used to achieve at least the stabilization schemes a) to g) listed above. In any case, the present invention falls within a context in which at least the following terms are to be generated:

- $a^2b^\dagger$ + h. c. : this first term corresponds to the non-linear conversion between two photons of a first mode a - the memory - and one photon of a second mode b - the buffer. This term requires a pump at a frequency $|2f_a - f_b|$, where $f_a$ is the resonant frequency of the first mode a and $f_b$ is the resonant frequency of the second mode b.

- $\alpha^2b^\dagger$ + h. c.: this second term requires the drive of the second mode b at a frequency $f_b$.

A.2 Quantum system for stabilizing a cat qubit

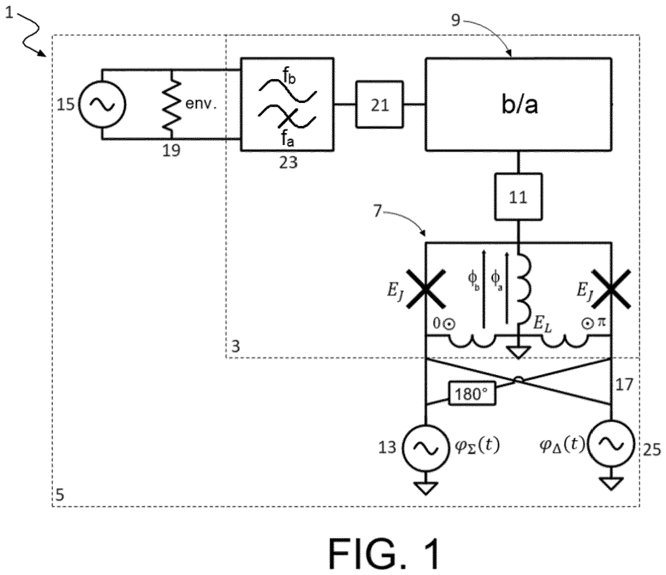

Figure 1 illustrates a quantum system 1 arranged to stabilize a cat qubit.
The quantum system 1 comprises a non-linear superconducting quantum circuit 3 and a command circuit 5.
The non-linear superconducting quantum circuit 3 is arranged to make possible at least four-wave mixing between the first mode a and the second mode b.
In the remainder of the description, the first mode a is referred to as the memory mode, while the second mode b is referred to as the buffer mode.
The memory mode a and the buffer mode b correspond to natural resonant frequencies of the non-linear superconducting quantum circuit 3. Consequently, the memory mode a and the buffer mode b each have a respective resonant frequency. The memory mode a has a resonant frequency $f_a = \frac{\omega_a}{2\pi}$ and the buffer mode b has a resonant frequency $f_b = \frac{\omega_b}{2\pi}$, where $\omega_a$ and $\omega_b$ are the respective angular frequencies of the memory mode a and the buffer mode b.

By "having" a memory mode and a buffer mode, it should be understood here that the non-linear superconducting quantum circuit 3 comprises components operating in a superconducting regime which host the modes independently of each other or concurrently. In other words, the memory mode a and the buffer mode b may be hosted in different subsets of components of the superconducting circuit or on the same subset of components.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f * \tau$ with $\tau$ the characteristic decay time. Of course, the skilled person would be aware of various other methods for determining the quality factor of a particular mode.

The non-linear superconducting quantum circuit 3 is intended to be subject to microwave radiations delivered by the command circuit 5 in order to engineer various non-linear interactions between the memory mode a and the buffer mode b. The frequency of each microwave radiation is tuned to select specific terms within the rotating-wave approximation.

The non-linear superconducting quantum circuit 3 comprises a non-linear element 7 and at least one resonant portion 9.

In the example of figure 1, the non-linear element 7 is a four-wave mixing non-linear element, and more specifically an asymmetrically threaded superconducting quantum interference device - or ATS hereinafter.

It is known to the skilled person that an ATS can be used to engineer the 2-to-1 photon conversion, i.e. the first term $a^2 b^\dagger$ + h. c. mentioned above, in order to perform a dissipative stabilization, as successfully shown by R. Lescanne *et al.* (2020).

Contrary to the first implementations of this stabilization scheme proposed by Z. Leghtas *et al.* (2015) and S. Touzard et al. in the article "Coherent Oscillations inside a Quantum Manifold Stabilized by Dissipation" (Physical Review X 8, 023005, 2018) in which the superconducting circuit element used as a four-wave mixer was a transmon with a single Josephson junction, the solution developed by R. Lescanne *et al.* (2020) exploits the ATS design which has much lower cross-Kerr terms than the transmon and thus allowed to observe the exponential suppression of bit-flips.

The ATS has flux lines through which radiation can be delivered to modulate a common flux and/or a differential flux.

In the remainder of the description, and without loss of generality, the non-linear element 7 is an ATS. However, it should be noted that the present invention may relate to several stabilization schemes of a cat qubit and therefore that the non-linear element 7 is not necessarily an ATS, and may be another four-wave mixing non-linear element, or a non-linear element for mixing at even higher orders.

For instance, the parametric dissipative stabilization, which corresponds to stabilization scheme a) detailed in subsection A.1 above, can be implemented with a Josephson junction instead of an ATS. On the other hand, the DC dissipative stabilization, which corresponds to stabilization scheme g) in the same subsection A.1, is implemented with one or more Josephson junctions exclusively subject to an appropriate DC bias so as to achieve the required four-wave mixing.

The 2-to-1 photon conversion between the memory mode a and the buffer mode b is obtained by parametrically pumping the ATS at the frequency $f_p = |2f_a - f_b|$. Advantageously, the pump frequency satisfies $f_p \gg g_2$ to make this parametric pumping work as well as possible, where $g_2$ is the two-photon coupling rate.

It is known to the skilled person that, when biased at its flux working point ($0 - \pi$ or conversely), the Hamiltonian $H_{ATS}$ of the ATS 7 has the following "sin-sin" form:

$$H_{ATS}/\hbar = -2E_J \sin\big(\varphi_\Sigma(t)\big)\sin(\varphi) + \frac{E_L}{2}\big(\varphi - \varphi_\Delta(t)\big)^2$$

where:

- $\varphi = \varphi_a(a + a^\dagger) + \varphi_b(b + b^\dagger)$ is the total superconducting phase difference across the ATS 7,
- $\varphi_a$ is the zero-point fluctuation of the phase of the memory mode a across the ATS 7,
- $\varphi_b$ is the zero-point fluctuation of the phase of the buffer mode b across the ATS 7,
- $E_J$ is the Josephson energy of the side junctions,
- $E_L$ is the inductive energy of the central inductance,
- $\varphi_\Sigma(t)$ corresponds to a common flux modulation of the two loops of the ATS 7,
- $\varphi_\Delta(t)$ corresponds to a differential flux modulation of the two loops of the ATS 7, and
- h is the reduced Planck constant.

The common flux modulation $\varphi_\Sigma(t)$ can be implemented by delivering microwave radiations through flux lines of the ATS 7 out of phase, while the differential flux modulation $\varphi_\Delta(t)$ can be implemented by delivering microwave radiations through flux lines of the ATS 7 in phase.

Parametric pumping of the ATS 107 is typically done by pumping the common flux as pumping the differential flux merely displaces the modes coupled to the ATS 107.

As an example, by pumping the common flux at the frequency $f_p = |2f_a - f_b|$, $\varphi_\Sigma(t) = \varepsilon_p\cos(2\pi f_p t)$, the non-linear resonant part of the Hamiltonian writes in the rotating frame:

$$H_{ATS}/\hbar = \frac{E_J \epsilon_p \varphi_a^2 \varphi_b}{2}(a^2 b^\dagger + \text{h. c.})$$

which is typically the 2-to-1 photon exchange Hamiltonian needed to engineer the two-photon stabilization.

The resonant portion 9 is arranged to be coupled to or included in the ATS 7 to provide the non-linear superconducting quantum circuit 3 with the memory mode a and the buffer mode b having respective resonant frequencies $f_a$ and $f_b$. More particularly, the memory mode a and the buffer mode b "participate" in the ATS 7, which means that a portion or the entirety of the mode magnetic energy is stored in the ATS 7. Such a participation can be quantified by the zero-point fluctuation of the superconducting phase across the ATS 7, noted $\varphi_a$ for the memory mode a and $\varphi_b$ for the buffer mode b.

In the schematic diagram of the quantum system 1 illustrated in figure 1, the non-linear superconducting quantum system 3 comprises only one resonant portion, i.e. the resonant portion 9. A single resonant portion can be configured to produce both the memory mode a and the buffer mode b. However, the non-linear superconducting quantum system 3 typically comprises two resonant portions to form the memory mode a and the buffer mode b respectively.

The resonant portion 9 takes the form of a linear microwave network. Such a linear microwave network is such that, when coupled via a linear coupler 11 to the ATS 7 which acts as an inductive element, the non-linear superconducting quantum circuit 3 has the memory mode a and the buffer mode b at respective resonant frequencies $f_a$ and $f_b$ which participate in the ATS 7.

The command circuit 5 is arranged to deliver microwave radiations.

More particularly, the command circuit 5 is arranged at least to parametrically drive the ATS 7 to implement the non-linear conversion between two photons of the memory mode a and one photon of the buffer mode b, and to drive the buffer mode b.

To this end, as illustrated in figure 1, the command circuit 5 comprises at least a microwave source 13 and a microwave source 15.

The microwave source 13 is set-up to modulate the common flux in the ATS 7.

For this purpose, a microwave network 17 is used to split the radiation emitted by the microwave source 13 and apply it to each node of the ATS 7 with the correct phase. Alternatively, two different microwave sources could be used, each being simply coupled to a single node of the ATS 7 and their relative phase and amplitude being set so as to achieve the desired flux modulation.

The microwave source 13 is arranged to deliver microwave radiation to the ATS 7 at a frequency equal to $|2f_a - f_b|$ to cause the non-linear superconducting quantum circuit 3 to perform the 2-to-1 photon conversion between the memory mode a and the buffer mode b, and thus to engineer the first term $a^2 b^\dagger$ + h. c.. To convert this 2-to-1 photon conversion into two-photon dissipation, the buffer mode b is selectively coupled to a load 19 via a linear coupler 21 and a microwave filter 23 configured as a band pass filter with a frequency $f_b$.

In the remainder of the description, the microwave source 13 is referred to as the two-photon pump.

Alternatively, the microwave filter 23 may be configured as a band stop filter at a frequency $f_a$ and may be placed in between, on the one hand, the external environment and, on the other hand, the memory mode a and the buffer mode b to isolate the memory mode a and thus prevent the memory mode a from suffering additional losses coming from unwanted coupling to the load 19.

Alternatively, it may be configured as a low-pass (respectively high-pass) filter if $f_a > f_b$ (resp $f_b > f_a$). In other embodiments, the microwave filter 23 can be omitted when coupling between the load 19 and substantially only the buffer mode b can be established. As explained above, the memory mode a has a high-quality factor $Q_a$ while the buffer mode b has a low-quality factor $Q_b$.

The microwave source 15 is arranged to drive the second mode b to engineer the second term $\alpha^2 b^\dagger$ + h. c.. The microwave source 15 is thus arranged to deliver microwave radiation at a frequency equal to $f_b$ to the resonant portion 9.

In the remainder of the description, the microwave source 15 is referred to as the buffer drive.

In the above, the load 19 can be seen as part of the command circuit 5 of figure 1, while the linear coupler 21 and the microwave filter 23 can be seen as part of the non-linear superconducting quantum circuit 3.

Finally, in figure 1, the command circuit 5 further comprises a microwave source 25 set-up to modulate the differential flux in the ATS 7 through the microwave network 17.

Once again, the microwave network 17 is used for convenience but can be omitted and the microwave source 25 could be applied directly to both nodes of the ATS 7, their relative phase and amplitude being set so as to achieve the desired flux modulation.

For the sake of completeness, it may also be noted that the microwave source 25 can be used, instead of the microwave source 15, to deliver microwave radiation at a frequency $f_b$ to the resonant portion 9 to drive the buffer mode b.

It should be noted that the quantum system 1 can be adapted depending on the stabilization scheme to be implemented. For example, in order to implement the stabilization scheme f) described in subsection A.1, the command circuit 5 comprises an additional microwave source (not shown here) to achieve longitudinal coupling between the memory mode a and the buffer mode b.

Such an additional microwave source, referred to as the longitudinal pump hereinafter, is set-up to modulate the common flux in the ATS 7.

The longitudinal pump is arranged to deliver microwave radiation to the ATS 7 at a frequency equal to $f_b$ to generate an additional term $a^\dagger a b^\dagger$ + h. c..

This additional term $a^\dagger a b^\dagger$ + h. c., combined with the first term $a^2 b^\dagger$ + h. c. generated by the two-photon pump 13 and the second term $\alpha^2 b^\dagger$ + h. c. generated by the buffer drive 15, causes the non-linear superconducting quantum circuit 3 to engineer a Hamiltonian H expressed as follows:

$$H/\hbar = g_2(a^2 + \lambda a^\dagger a - \alpha^2)b^\dagger + \text{h. c.}$$

where:

- $g_2$ is the two-photon coupling rate - or interaction strength - proportional to the amplitude of the two-photon pump 13,
- $a$ is the annihilation operator of the memory mode a,
- $\lambda$ is a complex number which phase and amplitude result from the amplitude of the radiation induced by the longitudinal pump,
- $\alpha$ is a complex number resulting from the buffer drive 15,
- $b$ is the annihilation operator of the buffer mode b,
- h. c. designates the Hermitian conjugate.

The Hamiltonian H yields through dissipation of the buffer mode b an effective dissipator $D[a^2 + \lambda a^\dagger a - \alpha^2]$ which stabilizes the two-dimensional manifold hosting a particular type of bosonic qubit: a moon cat qubit.

B. Low resonant frequency memory

The Applicant has studied the relationship between the quality of the memory mode a and its resonant frequency $f_a$.

To do this, it is relevant to consider the relaxation time $T_1$, which quantifies the decay of quantum states in general, and cat states in particular. More particularly, the relaxation time $T_1$ characterizes the probability of for a cat qubit to move from an excited state to a ground state.

The relaxation time $T_1$ is bounded to the photon loss mechanisms of the memory mode a. Consequently, the relaxation time $T_1$ can be expressed as follows:

$$T_1 = {}^1\!/_{\kappa_{tot}}$$

Usually, the decay rate is denoted $\kappa$; however, here, the notation $\kappa_{tot}$ is used to emphasize that the decay rate is the sum of all the loss channels, whether intrinsic losses or losses due to the coupling of the memory mode a with the external environment.

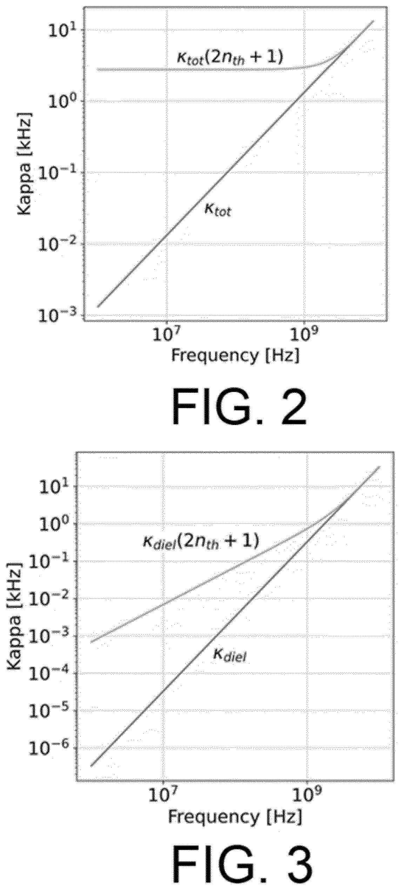

Figure 2 shows the evolution of the decay rate as a function of the resonant frequency $f_a$ of the memory mode a. It appears that the lower the resonant frequency $f_a$ of the memory mode a, the lower the decay rate $\kappa_{tot}$.

As mentioned in the introduction, lowering the resonant frequency $f_a$ of the memory mode a makes it possible to reduce the single-photon loss rate $\kappa_1$.

The single-photon loss rate $\kappa_1$ is all the more important in the context of cat qubits as the ratio ${}^{\kappa_1}\!/_{\kappa_2}$ must be as low as possible to reduce the phase-flip probability, which is the main challenge given that cat qubits already makes it possible to observe an exponential decrease of the bit-flip rate.

There is therefore an advantage in lowering the resonant frequency $f_a$ of the memory mode a compared to what is known in the prior art.

The Applicant has thus discovered that it is promising to have a memory mode a with a low resonant frequency $f_a$, i.e. a resonant frequency $f_a$ less than or equal to 3.5 gigahertz (GHz).

This observation must however be balanced by the fact that lowering the resonant frequency $f_a$ of the memory mode a also has the effect of increasing the thermal population $n_{th}$ of photons. Fluctuations in the decay rate $\kappa$, particularly one-off increases or decreases, cause phase-flips. Without wishing to be bound by theory, the phase-flip rate $\kappa_{pf}$ can be expressed as follows:

$$\kappa_{pf} = 2|\alpha|^2 \kappa_{tot}(2n_{th} + 1)$$

This phenomenon can be seen in figure 2 which clearly shows saturation of the gain at the lowest frequencies, reaching a plateau when the resonant frequency $f_a$ of the memory mode a is below 1 gigahertz (GHz).

From this observation, it is interesting to consider two possible choices: the frequency range from 1 to 3.5 gigahertz (GHz) to have a low resonant frequency $f_a$ while remaining above the plateau of the thermal population $n_{th}$ of photons; or the frequency range below 1 gigahertz (GHz) to have an even lower resonant frequency $f_a$ to reduce the decay rate but without being able to do better than the plateau of the thermal population $n_{th}$ of photons.

In addition to the preceding considerations, the Applicant has serious reasons to think that a low resonant frequency $f_a$ contributes all the more to improving the quality factor $Q_a$ of the memory mode a as the surface dielectric losses are preponderant in the relaxation mechanism and therefore in the relaxation time $T_1$.

The article by C. Wang et al. "Surface participation and dielectric loss in superconducting qubits" (Appl. Phys. Lett. 107, 162601, 2015) points out that relaxation of resonators can be caused by many dissipative channels such as dielectric losses and notes that the proportionality between qubit decay rate and surface participation ratios, representing the fraction of electric filed energy stored in a dissipative surface layer, strongly suggests surface dielectric loss as the dominant relaxation mechanism for superconducting transmon qubits.

Figure 3 shows the evolution of the dielectric losses as a function of the resonant frequency $f_a$ of the memory mode a. It appears that the dielectric losses are proportional to the square of the resonant frequency $f_a$ of the memory mode a.

The present invention therefore proposes a non-linear superconducting quantum circuit 3 including an ATS 7 and at least one resonant portion 9, having a memory mode a with a resonant frequency $f_a$ less than or equal to 3.5 gigahertz (GHz).

Such a frequency range, much lower than that of the prior art, makes it possible both to reduce the probability of phase-flip while reducing the relaxation time $T_1$, particularly when surface dielectric losses are dominant, and without having to suffer the inconvenience of a thermal population of photons increasing excessively and unnecessarily.

In the diagram in figure 1, a microwave filter 23 is present to filter the resonant frequency $f_a$ of the memory mode a. However, given the frequency range of the resonant frequency $f_a$ of the memory mode a, such a microwave filter 23 is superfluous and can be omitted.

Many stabilization schemes are compatible with such a resonant frequency $f_a$ of the memory mode a, in particular stabilization schemes a) to g) detailed in subsection A.1 above.

To this end, the non-linear superconducting quantum circuit 3, and more particularly the at least one resonant portion 9, includes a resonator 27 having a capacitive element 29 and an inductive element 31.

The subsections below detail how such a non-linear superconducting quantum circuit 3 can be achieved, both in terms of the electronic components that can be used for this purpose and in terms of possible lumped circuits.

B.1 Capacitor and inductor

As mentioned above, the memory mode a with a resonant frequency $f_a$ less than or equal to 3.5 gigahertz (GHz) is produced by a resonator 27 having a capacitive element 29 and an inductive element 31. Typically, the capacitive element 29 is a capacitor while the inductive element 31 is an inductor.

Such a resonator 27 can be referred to as an LC circuit.

The capacitive element 29 and the inductive element 31 can be connected either in series or in parallel within the resonator 27. In any case, it is well known that the resonant frequency of such a resonator 27 is :

$$f_a = \frac{1}{\sqrt{LC}}$$

where:

- *C* is the capacitance of the capacitive element 29, and
- *L* is the inductance of the inductive element 31.

Consequently, in order to obtain a resonant frequency $f_a$ within the target frequency range, it is possible to use a parallel or series connection and to adjust the capacitance *C* of the capacitive element 29 and/or the inductance *L* of the inductive element 31.

In particular, the Applicant's work has led him/her to use a capacitive element 29 with a very high capacitance *C,* and more particularly a capacitance *C* of between 1 and 10 picofarads (pF) and/or to use an inductive element 31 with a high inductance *L,* and more particularly an inductance *L* of between 0.3 and 5 nanohenry (nH).

B.1.1 Capacitor

In the examples of the present subsection, the low resonant frequency $f_a$ of the memory mode a is obtained using a capacitive element 29 with a high capacitance *C.*

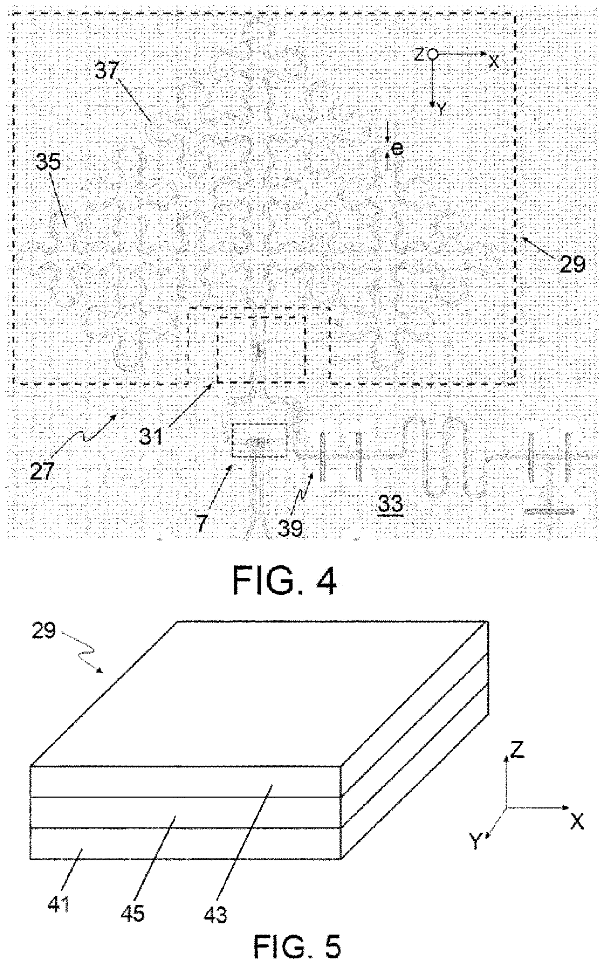

Figure 4 shows an embodiment of the resonator 27 in which the capacitive element 29 is a capacitor having a cloverleaf-like design.

More generally, the circuit of figure 4 comprises, in addition to the resonator 27, the ATS 7 and other components (not referenced here) of the non-linear superconducting quantum circuit 3.

The non-linear superconducting quantum circuit 3 is made from a dielectric substrate on which at least one superconducting material layer 33 is deposited.

The dielectric substrate is for example silicone or sapphire. Of course, other materials may be considered for the dielectric substrate. The superconducting material is for example aluminum (Al), tantalum (Ta) or niobium (Nb), and more generally all conventional superconducting metals.

Figure 4 is provided with orthogonal X-, Y- and Z-axes. The Z-axis corresponds to the stacking direction of the dielectric substrate and the superconducting material layer 33.

The capacitive element 29 of the resonator 27 is manufactured by etching the superconducting material layer 33 so as to isolate a sort of "fractal island" 35 within the superconducting material layer 33. Such a fractal island 35 is delimited by a perimeter groove 37 which gives it its cloverleaf-like shape.

The perimeter groove 37 has a constant width e all around the fractal island 35. Such a width e is typically equal to 30 micrometers ($\mu$m). At the perimeter groove 37, the fractal island 35 and the rest of the superconducting material layer 33, which corresponds to the ground plane, face each other - and are therefore separated by the width e - and thus together define the capacitive element 29. The fractal island 35 and the rest of the superconducting material layer 33 lie in the same XY-plane. Such a capacitive element 29 can thus be described as a coplanar capacitor.

In this cloverleaf-like design, increasing the length of the perimeter groove 37, and therefore the perimeter of the fractal island 35, makes it possible to increase the capacitance *C* of the capacitive element 29. Consequently, the length of the perimeter groove 37 is adjusted so that the capacitance *C* of the capacitive element 29 is of between 1 and 10 picofarad (pF).

This cloverleaf-like shape maximizes the capacitance *C* of the capacitive element 29 while minimizing the dimensions of its footprint on the superconducting material layer 33. In addition, such a design has the advantage of reducing the concentration of electric fields and therefore reducing loss channels such as dielectric losses. It also minimizes the self-inductance of the capacitive element 29 so that there is no resonating mode within the capacitive element 29 at low frequency.

To complete the description of figure 4, it should be noted that the inductive element 31 is formed by an array of Josephson junctions. Advantageously, this array of Josephson junctions contains as many Josephson junctions as possible to limit the non-linearities added to the non-linear superconducting quantum circuit 3. The number of Josephson junctions is limited by manufacturing constraints.

Finally, a transmission line 39 is used to couple the buffer mode b to the microwave filter 23, which may for instance be a Purcell filter (not shown). This transmission line 39 can be adapted to achieve a loss rate $\kappa_b$ of between 5 and 50 megahertz (MHz) for the buffer mode b.

It should be noted that other designs than the cloverleaf-like design can be etched on the superconducting material layer 33.

Figure 5 shows an embodiment in which the capacitive element 29 is a capacitor having a planar design. The capacitive element 29 is formed by a superposition of three layers: a first conductive plate 41, a second conductive plate 43 and a dielectric substrate 45.

The dielectric substrate 45 is sandwiched between the first conductive plate 41 and the second conductive plate 43.

The dielectric substrate 45 is for example silicone or sapphire. Of course, other materials may be considered for the dielectric substrate 45. The first and second conductive plates 41, 43 are for example made of aluminum (Al), tantalum (Ta), niobium (Nb), and more generally all conventional superconducting metals.

In this configuration, the capacitive element 29 is thus a planar - not coplanar - capacitor as the first and second conductive plates 41, 43 do not lie in the same plane.

Like figure 4, figure 5 is provided with orthogonal X-, Y- and Z-axes. The Z-axis corresponds to the stacking direction of the first conductive plate 41, the dielectric substrate 45 and the second conductive plate 43.

The capacitance C of the capacitive element 29 depends on the surface area of the first and second conductive plates 41, 43 and the distance between them, i.e. the thickness of the dielectric substrate 45. Consequently, the surface area of the first and second conductive plates 41, 43 and the distance between them is adjusted so that the capacitance $C$ of the capacitive element 29 is of between 1 and 10 picofarad (pF).

The skilled person knows that a capacitive element 29 with a high capacitance $C$ can be achieved by processes and configurations other than those described in this subsection.

B.1.2 Inductor

In the examples of the present subsection, the low resonant frequency $f_a$ of the memory mode a is obtained using an inductive element 31 with a high inductance $L$.

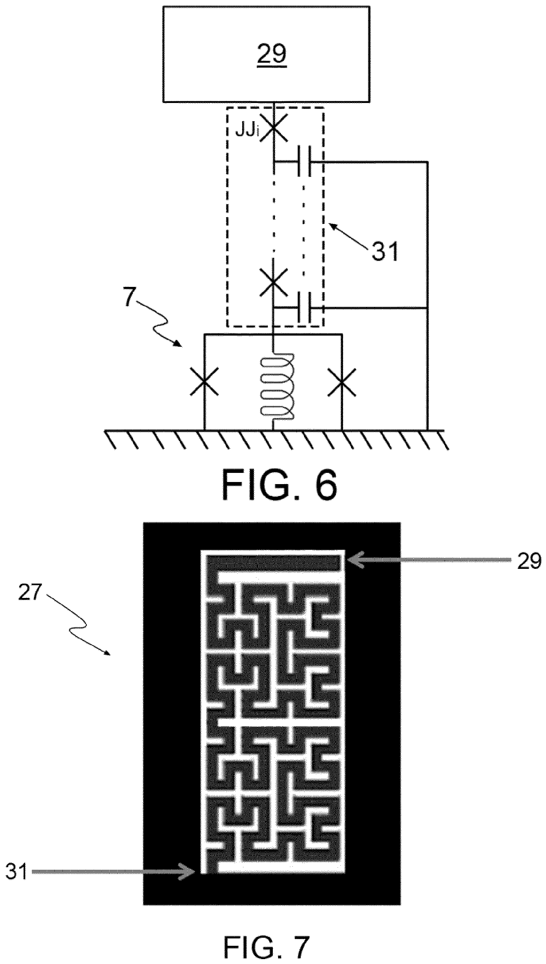

Figure 6 shows an embodiment in which the inductive element 31 is an inductor formed by a chain of Josephson junctions JJ;.

Such a chain of Josephson junctions JJ; is used as a transmission line to form a so-called $\lambda/4$ resonator.

As mentioned above in subsection A.2, it is possible to have several modes - at least the memory mode a and the buffer mode b - with a single resonant portion 9. This is precisely the case here with the $\lambda/4$ resonator formed by the chain of Josephson junctions $JJ_i$.

The resonator 27, formed by the $\lambda/4$ resonator and the capacitive element 29 (not shown here), presents several modes, each with a respective resonant frequency. The first mode of the resonator 27, i.e. the mode with the lowest resonant frequency, can be used as memory mode a; and the chain of Josephson junctions JJ; can be configured so that the inductance $L$ of the inductive element 31 is of between 0.3 and 5 nanohenry (nH).

As shown in figure 6, each Josephson junction JJ; is coupled to a respective grounded capacitor. These additional capacitors enable several modes. The value of each of the additional capacitors may be between 0.01 and 1 femtofarad (fF).

Generally speaking, the n-th mode of the resonator 27 has a resonant frequency $f_n$ defined as follows:

$$f_n = f_a(2n - 1)$$

It is possible to choose any k-th mode, where k is a natural number greater than 1, as the buffer mode b. For example, it is convenient to select the second mode (k=2). The resonant frequency $f_b$ of the buffer mode b is then :

$$f_b = f_2 = 3f_a$$

In such a case, it should be noted that the two-photon pump 13 must deliver microwave radiation to the ATS 7 at a frequency equal to $|2f_a - f_b| = f_a$. In other words, the two-photon pump 13 pumps at the resonant frequency $f_a$ of the memory mode a.

It is then necessary, as shown in figure 6, to load the transmission line with the capacitive element 29 to ground. More precisely, the capacitive element 29 is placed in between the end of the chain of Josephson junctions JJ; and the ground. This effectively modifies the modes frequency and yields $f_b \neq 3f_a$, which solves the aforementioned problem.

Figure 7 shows an embodiment of the resonator 27 in which the inductive element 31 is a Hilbert inductor.

In figure 7, the metal is black while the substrate is white.

Such a design is inspired by the article by M. Barra et al., "Miniaturization of superconducting filters using Hilbert fractal curves" (IEEE Transactions on applied superconductivity, vol. 15, no. 3, 3 september 2005).

In this configuration, the capacitive element 29 is a Hilbert capacitor. In particular, as shown in figure 7, the capacitive element 29 and the inductive element 31 both have a Hilbert design in that they are formed by a maze-like metal track, so that the capacitive element 29 and the inductive element 31 can be described as end capacitor and end inductor respectively.

This design is given as an example to highlight that several designs are possible for realizing an inductive element 31 with an inductance $L$ of between 0.3 and 5 nanohenry (nH). Moreover, the article by M. Barra *et al.* (2005) describes another design - the meander design - which can also be used to realize the resonator 27.

B.2 Lumped circuits

Just as it is possible to use different capacitors and inductors to achieve a capacitance of between 1 and 10 picofarad (pF) and an inductance of between 0.3 and 5 nanohenry (nH) respectively, different lumped circuits - and comprising such capacitors and/or inductors - can be realized to benefit from a resonant frequency $f_a$ of the memory mode a less than or equal to 3.5 gigahertz (GHz).

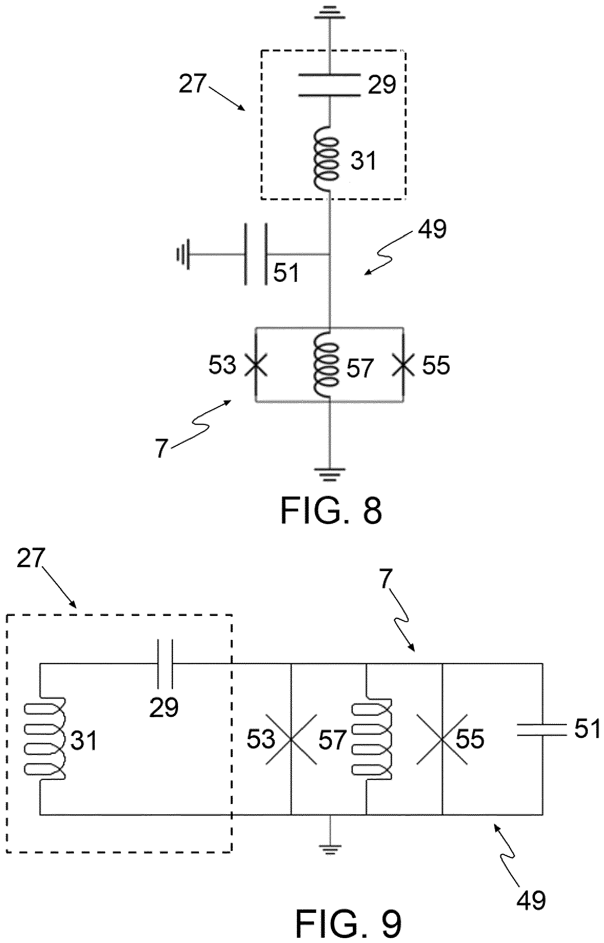

In the following, figures 8-11 each partially illustrate the non-linear superconducting quantum circuit 3. More specifically, each of these figures shows a lumped circuit with the memory mode a, the buffer mode b and the non-linear element 7.

In the examples described below, the non-linear element 7 is a four-wave mixing non-linear element and, more particularly, an ATS. However, as explained above, the non-linear element 7 may be another four-wave mixing non-linear element, or a non-linear element for mixing at even higher orders. The non-linear element 7 may be a single Josephson junction or a plurality of Josephson junctions if the stabilization scheme allows or requires it.

Figure 8 illustrates a circuit in which the resonator 27 is galvanically coupled to a resonator 49.

By "galvanically coupled", it should be understood here that there are short electrically conducting portions which connect the resonator 27 and the resonator 49, i.e., a short electrically conducting track or any other mean ensuring a physically continuous conducting connection. The expression "short" means that the electrically conducting track has an impedance which is negligeable compared to the impedance of the resonator 27 and the resonator 49 at the resonant frequencies $f_a$ and $f_b$. These short electrically conducting portions correspond to the linear coupler 11 of figure 1.

As detailed previously, the resonator 27 includes the capacitive element 29 and the inductive element 31. The capacitive element 29 and the inductive element 31 together produce the memory mode a having a resonant frequency $f_a$ less than or equal to 3.5 gigahertz (GHz). In other words, the resonator 27 corresponds to the memory mode a.

The resonator 27 can be made with a capacitive element 29 having a high capacitance and/or an inductive element 31 having a high inductance. Subsection B.1 proposes different designs for realizing such a capacitive element 29 and/or such an inductive element 31.

In the example of figure 8, the capacitive element 29 and the inductive element 31 are connected in series. Alternatively, the capacitive element 29 and the inductive element 31 can be connected in parallel.

The resonator 49 includes a capacitive element 51 and the ATS 7. The ATS 7 includes a first Josephson junction 53, a second Josephson junction 55 and an inductive element 57. The ATS 7 acts as an inductive element within the resonator 49. The resonator 49 corresponds to the buffer mode b.

Such a circuit can be described as "minimal" in that it involves as few elements as possible to have the memory mode a and the buffer mode b: two capacitive elements 29 and 51 and two inductive elements 31 and 7. Indeed, the ATS 7 plays both the role of inductive element to produce the buffer mode b and four-wave mixing non-linear element to generate the non-linear conversion between two photons of the memory mode a and one photon of the buffer mode b. Furthermore, it is also possible to use the ATS 7 as an inductive element of the memory mode a.

Figure 9 illustrates a circuit equivalent to that of figure 8 and thus shows another possible representation of such a minimal circuit.

The Applicant has realized the circuit of figure 8 using the cloverleaf-like design presented above in subsection B.1.1. In particular, the Applicant has adjusted the parameters to ensure that each of the memory mode a and the buffer mode b has a sufficiently large participation in ATS 7, i.e. low respective zero-point fluctuations $\varphi_a$ and $\varphi_b$. It is considered that the zero-point fluctuation $\varphi_a$, respectively $\varphi_b$, of the phase of the memory mode a, respectively the buffer mode b, across the ATS 7 is low enough for the participation of the memory mode a, respectively the buffer mode b, in the ATS 7 to be sufficient when such a zero-point fluctuation $\varphi_a$, respectively $\varphi_b$, is typically of between 0.005 and 0.3, and preferably between 0.01 and 0.15.

In the present case, the Applicant has selected the following values or ranges of values for the different parameters:

- the capacitance $C$ of the capacitive element 29: 1 to 2 picofarad (pF), and preferably 1.4 picofarad (pF),

- the capacitance of the capacitive element 51: 0.4 to 1 picofarad (pF), and preferably 0.6 picofarad (pF),

- the inductance $L$ of the inductive element 31: 2 to 20 nanohenry (nH), and preferably 6.1 nanohenry (nH),

- the inductance of the inductive element 57: 2 to 10 nanohenry (nH), and preferably 6.6 nanohenry (nH),

- the coupling to Purcell filter rate: 5 to 50 megahertz (MHz), and preferable 80 megahertz (MHz),

- the Purcell filter losses rate: 2 gigahertz (GHz),

- the zero-point fluctuation $\varphi_a$ of the phase of the memory mode a: 0.02 to 0.15, and

- the zero-point fluctuation $\varphi_b$ of the phase of the buffer mode b: 0.1 to 0.3.

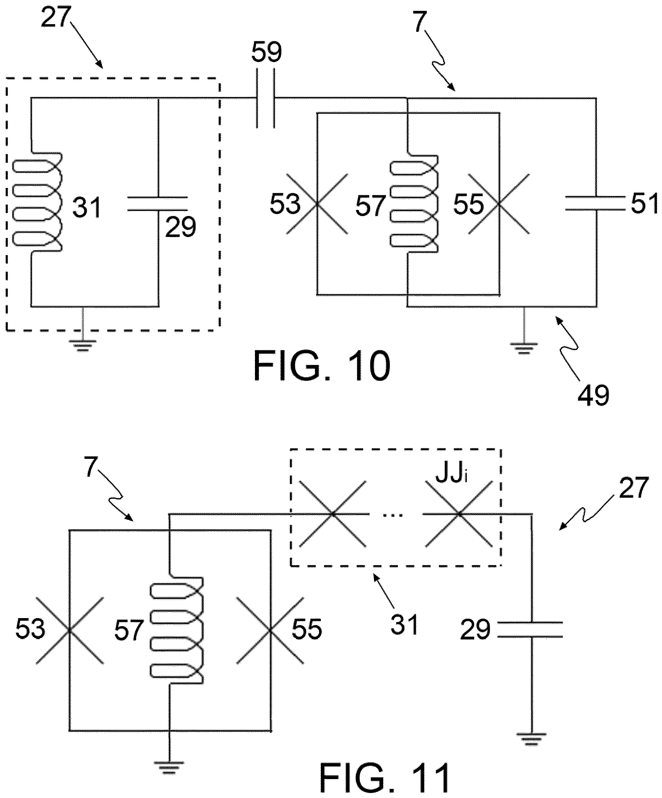

Figure 10 illustrates a circuit in which the resonator 27 is capacitively coupled to the resonator 49. In particular, the resonator 27 and the resonator 49 are coupled together via a capacitive element 59.

It should be noted that the same reference signs have been kept for ease of understanding.

As in figures 8 and 9, the resonator 27 corresponds to the memory mode a while the resonator 49 corresponds to the buffer mode b.

The Applicant has adjusted the parameters to ensure that each of the memory mode a and the buffer mode b has a sufficiently large participation in ATS 7, i.e. low respective zero-point fluctuations $\varphi_a$ and $\varphi_b$.

In the present case, the Applicant has selected the following values or ranges of values for the different parameters:

- the capacitance $C$ of the capacitive element 29: 1 to 10 picofarad (pF),

- the capacitance of the capacitive element 51: 1 to 10 picofarad (pF),

- the inductance $L$ of the inductive element 31: 5 to 15 nanohenry (nH),

- the inductance of the inductive element 57: 5 to 15 nanohenry (nH),

- the capacitance of the capacitive element 59: 1 to 10 picofarad (pF),

- the coupling to Purcell filter rate: 5 to 50 megahertz (MHz),

- the Purcell filter losses rate: 2 gigahertz (GHz),

- the zero-point fluctuation $\varphi_a$ of the phase of the memory mode a: 0.02 to 0.15, and

- the zero-point fluctuation $\varphi_b$ of the phase of the buffer mode b: 0.1 to 0.3.

Finally, figure 11 corresponds to the circuit of the embodiment of figure 6 in which the inductive element 31 of the resonator 27 is a chain of Josephson junctions JJ;.

The resonator 49, present in figures 8, 9 and 10, is absent here since, as explained above, the resonator 27 alone produces the memory mode a and the buffer mode b.

It should be noted that the resonator 27 - which corresponds to the resonant portion 9 of figure 1 - is galvanically coupled to the ATS 7.

Once again, the Applicant has adjusted the parameters to ensure that each of the memory mode a and the buffer mode b has a sufficiently large participation in ATS 7, i.e. low respective zero-point fluctuations $\varphi_a$ and $\varphi_b$.

In the present case, the Applicant has selected the following values or ranges of values for the different parameters:

- the capacitance $C$ of the capacitive element 29: 10 to 1000 femtofarad (fF),

- the number of Josephson junctions JJ; of the inductive element 31: 100 to 1000,

- the inductance of the inductive element 57: approximately 10 nanohenry (nH),

- the coupling to Purcell filter rate: 5 to 20 megahertz (MHz),

- the zero-point fluctuation $\varphi_a$ of the phase of the memory mode a: 0.01 to 0.05, and

- the zero-point fluctuation $\varphi_b$ of the phase of the buffer mode b: 0.02 to 0.1.

Furthermore, the additional capacitors connected to ground and respectively coupled to the Josephson JJ; junctions have a capacitance typically of between 0.01 and 1 femtofarad (fF). These have been omitted for clarity in figure 11, but are shown for instance in figure 6.

B.3 Performances of the low resonant frequency memory

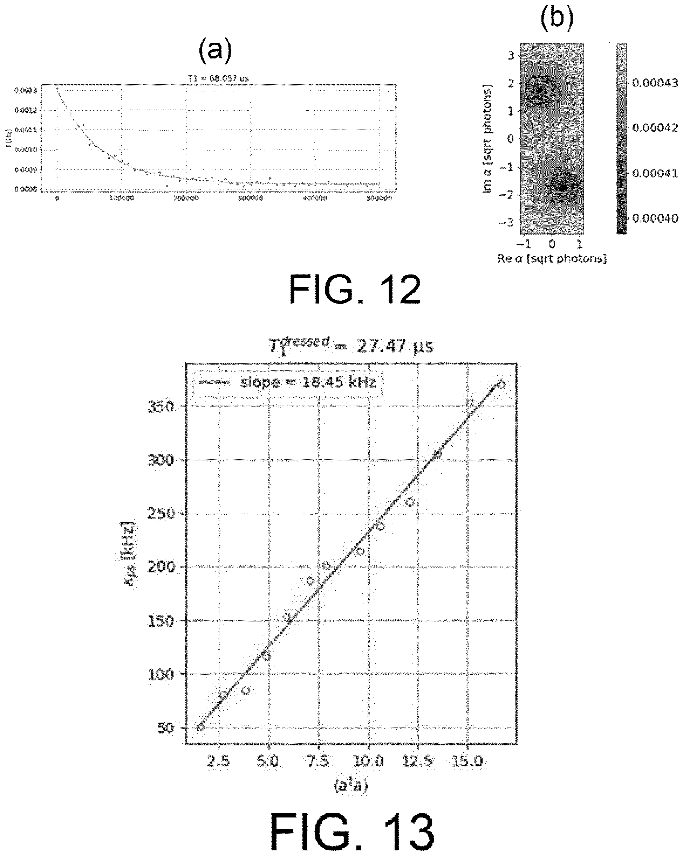

Figure 12 illustrates the performances of a cat qubit stabilized with the quantum system 1 according to the operating regime proposed by the present invention, i.e. with a memory mode a whose resonant frequency $f_a$ is less than or equal to 3.5 gigahertz (GHz).

More specifically, these performances were obtained by implementing the memory mode a according to the cloverleaf-like design of figure 4, and with the parameters listed above for the circuit shown in figures 8 and 9.

Diagram (a) shows the evolution of the population of the resonator 27 as a function of time. Diagram (a) shows that the resonator 27 has a relaxation time $T_1$ of approximately 68 microseconds ($\mu$s).

Diagram (b) is a Wigner tomography for a cat qubit of size $|\alpha|^2$ equal to 2.9 photons, an angle equal to -75.7 degrees and a stabilization time of 250 microseconds ($\mu$s), which corresponds to a deep steady state. It is recalled that the cat qubit angle depends on the phase of the buffer drive 15. Such a stabilization of a cat qubit has been performed with the resonator 27.

Figure 13 illustrates the evolution of the cat qubit phase-flip rate $\kappa_{pf}$ as a function of the number of photons in the memory. The number of photons is determined, both in the transient state and in the steady state of the memory, by measuring the quantity $\langle a^\dagger a \rangle$. It appears that a dressed time $T_1^{dressed}$ is equal to 27.47 microseconds ($\mu$s). Such a dressed time $T_1^{dressed}$ corresponds to the time value that best fits the linear scaling $\kappa_{pf} = 2|\alpha|^2/T_1^{dressed}$. This dressed relaxation time $T_1$ accounts for spurious effects due to the parametric pump.

To use the operating regime which is the subject of the present invention, i.e. a memory mode a with a resonant frequency $f_a$ less than or equal to 3 gigahertz (GHz), it is recommended to first empty the memory in order to have as few photons as possible in the memory.

By way of example, such a reset of the memory can be carried out by turning on an interaction between the memory mode a and the buffer mode b to implement a conversion between one photon of the memory mode a and one photon of the buffer mode b, which enables the memory to be cooled to the temperature of the buffer. It should be noted that, even with such a reset, the memory is not completely emptied: a few percent of photons remain due to the thermal population.

**Claims**

1. A non-linear superconducting quantum circuit (3) including:

   - at least one resonant portion (9) having a first mode (a) with a first resonant frequency and a second mode (b) with a second resonant frequency, and
   - a non-linear element (7) coupled to or at least partially included in said at least one resonant portion (9),

   wherein said at least one resonant portion has a resonator (27) including a capacitive element (29) and an inductive element (31) together producing said first mode (a), said capacitive element (29) having a capacitance of between 1 and 10 pF and/or said inductive element (31) having an inductance of between 0.3 and 5 nH such that the first resonant frequency is less than or equal to 3.5 GHz.

2. The non-linear superconducting quantum circuit (3) of claim 1, wherein the non-linear element (7) is a four-wave mixing non-linear element.

3. The non-linear superconducting quantum circuit (3) of claim 2, wherein the non-linear element (7) is an asymmetrically threaded superconducting quantum interference device.

4. The non-linear superconducting quantum circuit (3) of one of the preceding claims, wherein the non-linear element (7) is included in the at least one resonant portion (9) and is used as an inductive element (31) within said at least one resonant portion (9).

5. The non-linear superconducting quantum circuit (3) of one of the preceding claims wherein the capacitive element (29) is formed by a superposition of a dielectric substrate and a superconducting material layer (33), said superconducting material layer (33) being etched to define a cloverleaf-like shape.

6. The non-linear superconducting quantum circuit (3) of claim 5, wherein the capacitive element (29) has a capacitance of between 1 and 2 pF, and preferably equal to 1.4 pF.

7. The non-linear superconducting quantum circuit (3) of one of claims 1 to 4, wherein the capacitive element (29) is a planar capacitor formed by a dielectric substrate (45) sandwiched by a first and a second conductive plate (41, 43).

8. The non-linear superconducting quantum circuit (3) of one of the preceding claims, wherein the inductive element (31) is a chain of Josephson junctions.

9. The non-linear superconducting quantum circuit (3) of one of the preceding claims, wherein the first resonant frequency is of between 1 and 3.5 GHz.

10. The non-linear superconducting quantum circuit (3) of one of claims 1 to 8, wherein the first resonant frequency is less than or equal to 1 GHz.

11. The non-linear superconducting quantum circuit (3) of one of the preceding claims, wherein the first resonant frequency is substantially equal to 1 GHz.

12. The non-linear superconducting quantum circuit (3) of one of the preceding claims, wherein a zero-point fluctuation of the phase of the first mode (a) across the non-linear element (7) and a zero-point fluctuation of the phase of the second mode (b) across the non-linear element (7) are each of between 0.005 and 0.3, and preferably between 0.01 and 0.15.

13. A quantum system (1) for stabilizing a cat qubit comprising:

   - a command circuit (5) including at least a first microwave source (13) and a second microwave source (15) each arranged for delivering microwave radiation, and
   - a non-linear superconducting quantum circuit (3) including at least one resonant portion (9) having a first mode (a) with a first resonant frequency and a second mode (b) with a second resonant frequency, and a non-linear element (7) coupled to or at least partially included in said at least one resonant portion (9),
   wherein said at least one resonant portion has a resonator (27) including a capacitive element (29) and an inductive element (31) together producing said first mode (a), said capacitive element (29) having a capacitance of between 1 and 10 pF and/or said inductive element (31) having an inductance of between 0.3 and 5 nH such that the first resonant frequency is less than or equal to 3.5 GHz,
   said quantum system (1) being arranged such that, when

   • the first microwave source (13) delivers microwave radiation at a frequency equal to the absolute value of the difference between twice the first resonant frequency and the second resonant frequency to the non-linear element (7), and
   • the second microwave source (15) delivers microwave radiation at a frequency equal to the second resonant frequency to the second resonant portion (9) to drive the second mode (b),

   the non-linear superconducting quantum circuit (3) stabilizes a two-dimensional manifold hosting said cat qubit.

FIG. 1

FIG. 2

FIG. 3

FIG. 4

FIG. 5

19

## FIG. 6

## FIG. 7

FIG. 8

FIG. 9

27

59

7

31

29

53 57 55 51

49

## FIG. 10

7

JJ$_i$

27

53 57 55

31 29

## FIG. 11

(a)

(b)

FIG. 12

FIG. 13

Europäisches
Patentamt

European
Patent Office

Office européen
des brevets

## EUROPEAN SEARCH REPORT

**Application Number**

EP 24 30 5343

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 235 635 B1 (ABDO BALEEGH [US]) 19 March 2019 (2019-03-19) * paragraph [0008] * * paragraph [0019] - paragraph [0020] * * paragraph [0047] - paragraph [0050] * * figure 1 * | 1-13 | INV. G06N10/20 G06N10/40 |
| A | US 2023/138353 A1 (ZHENG GUOJI [NL] ET AL) 4 May 2023 (2023-05-04) * paragraph [0052] * | 1-13 | |
| A | US 2019/044046 A1 (CAUDILLO ROMAN [US] ET AL) 7 February 2019 (2019-02-07) * paragraph [0029] * * paragraph [0033] * | 1-13 | |
| A | US 2022/187388 A1 (PHUNG TIMOTHY [US] ET AL) 16 June 2022 (2022-06-16) * paragraph [0025] - paragraph [0047] * * figures 1, 2 * | 5,7 | |
| A | US 2023/216495 A1 (YAMAJI TOMOHIRO [JP] ET AL) 6 July 2023 (2023-07-06) * paragraph [0050] - paragraph [0057] * * figure 6a * | 5,7 | **TECHNICAL FIELDS SEARCHED (IPC)** G06N |

The present search report has been drawn up for all claims

| Place of search | Date of completion of the search | Examiner |
|---|---|---|
| The Hague | 31 July 2024 | Baldan, Marco |

**ANNEX TO THE EUROPEAN SEARCH REPORT
ON EUROPEAN PATENT APPLICATION NO.**                EP 24 30 5343

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | | Publication date | Patent family member(s) | | | Publication date |
|---|---|---|---|---|---|---|
| US 10235635 | B1 | 19-03-2019 | CN | 111108687 | A | 05-05-2020 |
| | | | DE | 112017007873 | T5 | 07-05-2020 |
| | | | GB | 2581449 | A | 19-08-2020 |
| | | | JP | 6941230 | B2 | 29-09-2021 |
| | | | JP | 2021500737 | A | 07-01-2021 |
| | | | US | 10235635 | B1 | 19-03-2019 |
| | | | US | 2019156238 | A1 | 23-05-2019 |
| | | | US | 2020050961 | A1 | 13-02-2020 |
| | | | US | 2021110291 | A1 | 15-04-2021 |
| | | | WO | 2019077399 | A1 | 25-04-2019 |
| US 2023138353 | A1 | 04-05-2023 | EP | 4133526 | A1 | 15-02-2023 |
| | | | NL | 2025291 | B1 | 25-10-2021 |
| | | | US | 2023138353 | A1 | 04-05-2023 |
| | | | WO | 2021204897 | A1 | 14-10-2021 |
| US 2019044046 | A1 | 07-02-2019 | NONE | | | |
| US 2022187388 | A1 | 16-06-2022 | AU | 2021398474 | A1 | 01-06-2023 |
| | | | CN | 116635873 | A | 22-08-2023 |
| | | | EP | 4260459 | A1 | 18-10-2023 |
| | | | JP | 2024500037 | A | 04-01-2024 |
| | | | US | 2022187388 | A1 | 16-06-2022 |
| | | | WO | 2022122857 | A1 | 16-06-2022 |
| US 2023216495 | A1 | 06-07-2023 | JP | 2023100215 | A | 18-07-2023 |
| | | | US | 2023216495 | A1 | 06-07-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147
- EP 23306839

**Non-patent literature cited in the description**

- **R. LESCANNE et al.** Exponential suppression of bit flips in a qubit encoded in an oscillator. *Nature Physics*, 2020
- **Z. LEGHTAS et al.** Confining the state of light to a quantum manifold by engineered two-photon loss. *Science*, 2015, vol. 347 (6224)
- **C. BERDOU et al.** One Hundred Second Bit-Flip Time in a Two-Photon Dissipative Oscillator. *PRX Quantum*, 2023, vol. 4, 020350
- **U. RÉGLADE et al.** Quantum control of a cat-qubit with bit-flip times exceeding ten seconds. *arXiv:2307.06617*
- **A. GRIMM et al.** The Kerr-Cat Qubit: Stabilization, Readout, and Gates. *Nature*, 2020, vol. 584, 205-209
- **G. BEAULIEU et al.** Observation of first- and second-order dissipative phase transitions in a two-photon driven Kerr resonator. *arXiv:2310.13636*
- **S. TOUZARD et al.** Coherent Oscillations inside a Quantum Manifold Stabilized by Dissipation. *Physical Review X*, 2018, vol. 8, 023005
- **C. WANG et al.** Surface participation and dielectric loss in superconducting qubits. *Appl. Phys. Lett.*, 2015, vol. 107, 162601
- **M. BARRA et al.** Miniaturization of superconducting filters using Hilbert fractal curves. *IEEE Transactions on applied superconductivity*, 03 September 2005, vol. 15 (3)